# EUROPEAN PATENT SPECIFICATION

(11) **EP 1 368 384 B1**
(45) Date of publication and mention of the grant of the patent: **20.08.2008**
(21) Application number: 02706313.0
(22) Date of filing: 19.02.2002
(51) Int. Cl.: C08F 4/70, C08F 136/06, B01J 31/22, B01J 31/02, B01J 31/14

(54) **MANUFACTURE OF CONJUGATED DIENE POLYMERS USING AN IRON-BASED CATALYST COMPOSITION**
HERSTELLUNG VON KONJUGIERTEN DIEN-POLYMEREN MITTELS EINER KATALYSATORZUSAMMENSETZUNG BASIEREND AUF EISEN
PRODUCTION DE POLYMERES DIENES CONJUGUES A L'AIDE D'UNE COMPOSITION CATALYTIQUE A BASE DE FER

(30) Priority: 19.02.2001 US 788802
(43) Date of publication of application: 10.12.2003
(73) Proprietor: Bridgestone Corporation, Tokyo 104 (JP)
(72) Inventor: LUO, Steven, Akron, OH 44313 (US)
(74) Representative: Albrecht, Thomas
(86) International application number: PCT/US2002/004811
(87) International publication number: WO 2002/066523

(56) References cited:
- EP-A- 0 994 128
- EP-A- 0 994 130

## Description

### BACKGROUND OF THE INVENTION

The present invention relates to an iron-based catalyst composition for polymerizing conjugated dienes such as 1,3-butadiene into polymers such as syndiotactic 1,2-polybutadiene.

Syndiotactic 1,2-polybutadiene (s-PBD) is a crystalline thermoplastic resin that has a stereoregular structure in which the side-chain vinyl groups are located alternately on the opposite sides in relation to the polymeric main chain. It exhibits the properties of both plastics and rubber and therefore has many uses. For example, films, fibers, and various molded articles can be made from s-PBD. It can also be blended into and co-cured with natural or synthetic rubbers in order to improve the properties thereof. Generally, s-PBD has a melting temperature in the range of from about 195° to about 215°C but, due to processability considerations, s-PBD preferably has a melting temperature of less than about 195°C.

Various transition metal catalyst systems based on Co, Ti, V, Cr, and Mo for the preparation of s-PBD have been reported. The majority of these catalyst systems, however, have no practical utility because they have low catalytic activity or poor stereoselectivity and, in some cases, they produce low molecular weight polymers or partially crosslinked polymers unsuitable for commercial use.

Two Co-based catalyst systems are known for preparing s-PBD. The first includes a Co compound, a phosphine compound, an organoaluminum (org-Al) compound, and water. This catalyst system yields s-PBD having very low crystallinity. Also, this catalyst system develops sufficient catalytic activity only when halogenated hydrocarbon solvents, which present toxicity issues, are used as the polymerization medium.

The second catalyst system includes a Co compound, an org-Al compound, and CS₂. Because CS₂ has a low flash point, obnoxious smell, high volatility, and toxicity, it is difficult and dangerous to use and requires expensive safety measures to prevent even minimal amounts escaping into the atmosphere. Furthermore, the s-PBD produced with this catalyst system has a melting temperature of about 200° to about 210°C, which makes it difficult to process. Although the melting temperature of the s-PBD produced with this Co catalyst system can be reduced by employing a catalyst modifier, it has adverse effects on the catalyst activity and polymer yields.

Coordination catalyst systems based on Fe-containing compounds, such as the combination of iron(III) acetylacetonate and triethylaluminum, are known, although they have very low catalytic activity and poor stereoselectivity for polymerizing conjugated dienes. The product mixture often contains oligomers, low molecular weight liquid polymers, or partially crosslinked polymers. Therefore, these Fe-based catalyst systems have no industrial utility.

EP 0 994 128 A1 and EP 0 994 130 A1 describe catalytic systems suitable for polymerizing butadiene comprising phosphonates, iron compounds and trialkylaluminium compounds.

### SUMMARY OF THE INVENTION

The present invention provides a catalyst composition that is the combination of ingredients comprising an iron-containing compound; a silyl phosphonate; and an organoaluminum compound, wherein said silyl phosphonate is an acyclic silyl phosphonate defined by the structure: 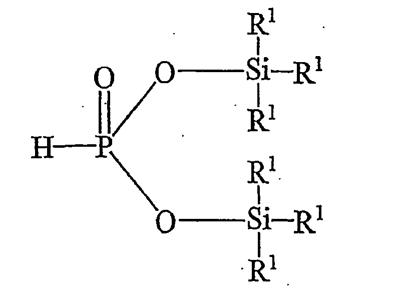 where each R¹ independently is a hydrogen atom or monovalent organic group or wherein said silyl phophonate is a cyclic silyl phosphonate defined by the structure: 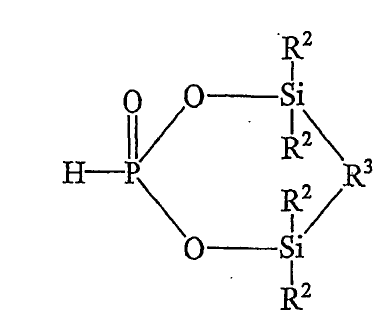 where each R² independently is a hydrogen atom or a monovalent organic group and R³ is a bond between silicon atoms or a divalent organic group.

The present invention provides a catalyst composition that is the combination or reaction product of ingredients that include an iron-containing compound, a silyl phosphonate, and an organoaluminum compound.

The present invention further includes a process for forming conjugated diene polymers including the step of polymerizing conjugated diene monomers in the presence of a catalytically effective amount of this catalyst composition.

Advantageously, this catalyst composition has very high catalytic activity and stereoselectivity for polymerizing 1,3-butadiene into s-PBD. This activity and selectivity, among other advantages, allows s-PBD to be produced in high yields with low catalyst levels after relatively short polymerization times. Significantly, this catalyst composition is very versatile and capable of producing s-PBD with a wide range of melting temperatures without the need for catalyst modifiers, which may have adverse effects on the catalyst activity and polymer yields. In addition, this catalyst composition does not contain CS₂. Therefore, the toxicity, objectionable smell, dangers, and expense associated with the use of carbon disulfide are eliminated. Further, the Fe-containing compounds utilized are generally stable, inexpensive, relatively innocuous, and readily available. Still further, this catalyst composition has high catalytic activity in a wide variety of solvents including the environmentally-preferred non-halogenated solvents such as aliphatic and cycloaliphatic hydrocarbons.

### DETAILED DESCRIPTION OF PREFERRED EMBODIMENTS

The catalyst composition is formed by combining an Fe-containing compound, a silyl phosphonate, and an org-Al compound; other organometallic compounds or Lewis bases can also be added, if desired.

Various Fe-containing compounds or mixtures thereof can be employed in the catalyst composition. Preferably, these Fe-containing compounds are soluble in a hydrocarbon solvent such as aromatic hydrocarbons, aliphatic hydrocarbons, or cycloaliphatic hydrocarbons. Hydrocarbon-insoluble Fe-containing compounds, however, can be suspended in the polymerization medium to form the catalytically active species and are also useful.

The Fe atom in the Fe-containing compounds can be in various oxidation states including but not limited to 0, +2, +3, and +4. Ferrous compounds, wherein the Fe atom is in the +2 oxidation state, and ferric compounds, wherein the Fe atom is in the +3 oxidation state, are preferred. Suitable Fe-containing compounds include, but are not limited to, the following classes of compounds: carboxylates, organophosphates, organophosphonates, organophosphinates, (dithio)carbamates, xanthates, β-diketonates, alkoxides or aryloxides, and organoiron compounds.

Suitable carboxylates, with the associated Fe atom in either the +2 or +3 oxidation states, include formate, acetate, (meth)acrylate, valerate, gluconate, citrate, fumarate, lactate, maleate, oxalate, 2-ethylhexanoate, neodecanoate, naphthenate, stearate, oleate, benzoate, and picolinate.

Suitable organophosphates, with the associated Fe atom in either the +2 or +3 oxidation states, dibutyl phosphate, dipentyl phosphate, dihexyl phosphate, diheptyl phosphate, dioctyl phosphate, bis(1-methylheptyl) phosphate, bis(2-ethylhexyl) phosphate, didecyl phosphate, didodecyl phosphate, dioctadecyl phosphate, dioleyl phosphate, diphenyl phosphate, bis(p-nonylphenyl) phosphate, butyl (2-ethylhexyl) phosphate, (1-methylheptyl) (2-ethylhexyl) phosphate, and (2-ethylhexyl) (p-nonylphenyl) phosphate.

Suitable organophosphonates, with the associated Fe atom in either the +2 or +3 oxidation states, butyl phosphonate, pentyl phosphonate, hexyl phosphonate, heptyl phosphonate, octyl phosphonate, (1-methylheptyl) phosphonate, (2-ethylhexyl) phosphonate, decyl phosphonate, dodecyl phosphonate, octadecyl phosphonate, oleyl phosphonate, phenyl phosphor-nate, (p-nonylphenyl) phosphonate, butyl butylphosphonate, pentyl pentyl-phosphonate, hexyl hexylphosphonate, heptyl heptylphosphonate, octyl octylphosphonate, (1-methylheptyl) (1-methylheptyl)phosphonate, (2-ethylhexyl) (2-ethylhexyl)phosphonate, decyl decylphosphonate, dodecyl dodecylphosphonate, octadecyl octadecylphosphonate, oleyl oleylphos-phonate, phenyl phenylphosphonate, (p-nonylphenyl) (p-nonylphenyl)phosphonate, butyl (2-ethylhexyl)phosphonate, (2-ethylhexyl) butylphosphonate, (1-methylheptyl) (2-ethylhexyl)phosphonate, (2-ethylhexyl) (1-methylheptyl)-phosphonate, (2-ethylhexyl) (p-nonylphenyl)phosphonate, and (p-nonylphenyl) (2-ethylhexyl)phosphonate.

Suitable organophosphinates, with the associated Fe atom in either the +2 or +3 oxidation states, include butylphosphinate, pentylphosphinate, hexylphosphinate, heptylphosphinate, octylphosphinate, (1-methylheptyl)-phosphinate, (2-ethylhexyl)phosphinate, decylphosphinate, dodecylphos-phinate, octadecylphosphinate, oleylphosphinate, phenylphosphinate, (p-nonylphenyl)phosphinate, dibutylphosphinate, dipentylphosphinate, dihexyl-phosphinate, diheptylphosphinate, dioctylphosphinate, bis(1-methylheptyl)-phosphinate, bis(2-ethylhexyl)phosphinate, didecylphosphinate, didodecyl-phosphinate, dioctadecylphosphinate, dioleylphosphinate, diphenylphosphi-nate, bis(p-nonylphenyl)phosphinate, butyl(2-ethylhexyl)phosphinate, (1-methylheptyl)(2-ethylhexyl)phosphinate, and (2-ethylhexyl)(p-nonylphenyl)-phosphinate.

Suitable (dithio)carbamates, with the associated Fe atom in either the +2 or +3 oxidation states, include dimethyl(dithio)carbamate, diethyl(dithio)-carbamate, diisopropyl(dithio)carbamate, dibutyl(dithio)carbamate, and dibenzyl(dithio)carbamate.

Suitable xanthates, with the associated Fe atom in either the +2 or +3 oxidation states, include methylxanthate, ethylxanthate, isopropylxanthate, butylxanthate, and benzylxanthate.

Suitable β-diketonates, with the associated Fe atom in either the +2 or +3 oxidation states, include acetylacetonate, trifluoroacetylacetonate, hexa-fluoroacetylacetonate, benzoylacetonate, and 2,2,6,6-tetramethyl-3,5-heptanedionate.

Suitable alkoxides or aryloxides, with the associated Fe atom in either the +2 or +3 oxidation states, include methoxide, ethoxide, isopropoxide, 2-ethylhexoxide, phenoxide, nonylphenoxide, and naphthoxide.

The term "organoiron compound" refers to any iron compound containing at least one covalent Fe-C bond. Suitable organoiron compounds include bis(cyclopentadienyl)iron(II), bis(pentamethylcyclopentadienyl)-iron(II), bis(pentadienyl)iron(II), bis(2,4-dimethylpentadienyl)iron(II), bis(allyl)-dicarbonyliron(II), (cyclopentadienyl)(pentadienyl)iron(II), tetra(1-norbomyl)-iron(IV), (trimethylenemethane)tricarbonyliron(II), bis(butadiene)carbonyl-iron(0), butadienetricarbonyliron(0), and bis(cyclooctatetraene)iron(0).

Silyl phosphonate compounds employed in the catalyst composition are acyclic silyl phosphonates, cyclic silyl phosphonates, and mixtures thereof. Acyclic silyl phosphonates may be represented by the structure: 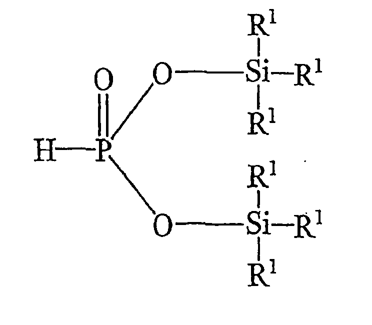 where each R¹ independently is a H atom or a monovalent organic group. Preferably, each R¹ is a hydrocarbyl group such as, but not limited to, alkyl, cycloalkyl, substituted cycloalkyl, alkenyl, cycloalkenyl, substituted cycloalkenyl, aryl, substituted aryl, aralkyl, alkaryl, allyl, and alkynyl groups, with each group preferably containing from 1 C atom (or the appropriate minimum number of C atoms to form the group in question) up to about 20 C atoms. These hydrocarbyl groups may contain heteroatoms such as, e.g., N, O, Si, S, and P. The acyclic silyl phosphonates may be associated in dimeric, trimeric or oligomeric forms by hydrogen bonding.

Suitable acyclic silyl phosphonates include bis(trimethylsilyl) phosphonate, bis(dimethylsilyl) phosphonate, bis(triethylsilyl) phosphonate, bis(di-ethylsilyl) phosphonate, bis(tri-n-propylsilyl) phosphonate, bis(di-n-propyl-silyl) phosphonate, bis(triisopropylsilyl) phosphonate, bis(diisopropylsilyl) phosphonate, bis(tri-n-butylsilyl) phosphonate, bis(di-n-butylsilyl) phospho-nate, bis(triisobutylsilyl) phosphonate, bis(diisobutylsilyl) phosphonate, bis(tri-t-butylsilyl) phosphonate, bis(di-t-butylsilyl) phosphonate, bis(trihexyl-silyl) phosphonate, bis(dihexylsilyl) phosphonate, bis(trioctylsilyl) phosphonate, bis(dioctylsilyl) phosphonate, bis(tricyclohexylsilyl) phosphonate, bis(di-cyclohexylsilyl) phosphonate, bis(triphenylsilyl) phosphonate, bis(diphenylsilyl) phosphonate, bis(tri-p-tolylsilyl) phosphonate, bis(di-p-tolylsilyl) phosphonate, bis(tribenzylsilyl) phosphonate, bis(dibenzylsilyl) phosphonate, bis(methyldiethylsilyl) phosphonate, bis(methyldi-n-propylsilyl) phosphonate, bis(methyldiisopropylsilyl) phosphonate, bis(methyldi-n-butylsilyl) phosphonate, bis(methyldiisobutylsilyl) phosphonate, bis(methyldi-t-butylsilyl) phosphonate, bis(methyldiphenylsilyl) phosphonate, bis(dimethylethylsilyl) phosphonate, bis(dimethyl-n-propylsilyl) phosphonate, bis(dimethylisopropylsilyl) phosphonate, bis(dimethyl-n-butylsilyl) phosphonate, bis(dimethylisobutyl-silyl) phosphonate, bis(dimethyl-t-butylsilyl) phosphonate, bis(dimethyl-phenylsilyl) phosphonate, bis(t-butyldiphenylsilyl) phosphonate, bis[tris(2-ethylhexyl)silyl] phosphonate, bis[bis(2-ethylhexyl)silyl] phosphonate, bis[tris-(nonylphenyl)silyl] phosphonate, bis[tris(2,4,6-trimethylphenyl)silyi] phosphonate, bis[bis(2,4,6-trimethylphenyl)silyl] phosphonate, bis[tris(4-fluorophenyl)silyl] phosphonate, bis[bis(4-fluorophenyl)silyl] phosphonate, bis[tris-(pentafluorophenyl)silyl] phosphonate, bis[tris(trifluoromethyl)silyl] phosphonate, bis[tris(2,2,2-trifluoroethyl)silyl] phosphonate, bis[tris(trimethylsilyl)silyl] phosphonate, bis[tris(trimethylsilylmethyl)silyl] phosphonate, bis[tris(dimethylsilyl)silyl] phosphonate, bis[tris(2-butoxyethyl)silyl] phosphonate, bis(trimethoxysilyl) phosphonate, bis(triethoxysilyl) phosphonate, bis(triphen-oxysilyl) phosphonate, bis[tris(trimethylsilyloxy)silyl] phosphonate, bis[tris(di-methylsilyloxy)silyl] phosphonate, or mixtures thereof.

Cyclic silyl phosphonates contain a ring structure formed by joining the two Si atoms together or by bridging the two Si atoms with one or more divalent organic groups. These cyclic silyl phosphonates may be represented by the structure: 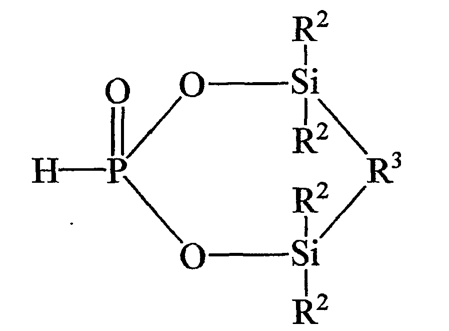 where each R² independently is a H atom or a monovalent organic group and R³ is a bond between the Si atoms or a divalent organic group. Bicyclic silyl phosphonates may be formed by joining two R² groups, and therefore the term cyclic silyl phosphonate includes multi-cyclic silyl phosphonates. Preferably, each R² is a hydrocarbyl group such as, e.g., alkyl, cycloalkyl, substituted cycloalkyl, alkenyl, cycloalkenyl, substituted cycloalkenyl, aryl, substituted aryl, aralkyl, alkaryl, allyl, and alkynyl groups, with each group preferably containing from 1 C atom (or the appropriate minimum number of C atoms to form the group in question) up to about 20 C atoms. These hydrocarbyl groups may contain heteroatoms such as, e.g., N, O, Si, S, and P. Preferably, R³ is a hydrocarbylene group such as, e.g., alkylene, substituted alkylene, cycloalkylene, substituted cycloalkylene, alkenylene, substituted alkenylene, cycloalkenylene, substituted cycloalkenylene, arylene, and substituted arylene groups, with each group preferably containing from 1 C atom (or the appropriate minimum number of C atoms to form the group in question) up to about 20 C atoms. These hydrocarbylene groups may contain heteroatoms such as, e.g., N, O, Si, S, and P. The cyclic silyl phosphonates may be associated in dimeric, trimeric or oligomeric forms by hydrogen bonding.

Suitable cyclic silyl phosphonates are 2-oxo-(2H)-4,5-disila-1,3,2-dioxaphospholane, 2-oxo-(2H)-4,5-disila-4,4,5,5-tetramethyl-1,3,2-dioxa-phospholane, 2-oxo-(2H)-4,5-disila-4,4,5,5-tetraethyl-1,3,2-dioxaphospho-lane, 2-oxo-(2H)-4,5-disila-4,4,5,5-tetraphenyl-1,3,2-dioxaphospholane, 2-oxo-(2H)-4,5-disila-4,4,5,5-tetrabenzyl-1,3,2-dioxaphospholane, 2-oxo-(2H)-4,5-disila-4,5-dimethyl-1,3,2-dioxaphospholane, 2-oxo-(2H)-4,5-disila-4,5-diethyl-1,3,2-dioxaphospholane, 2-oxo-(2H)-4,5-disila-4,5-diphenyl-1,3,2-dioxaphospholane, 2-oxo-(2H)-4,5-disila-4,5-dibenzyl-1,3,2-dioxaphopho-lane, 2-oxo-(2H)-4.5-disila-4-methyl-1,3,2-dioxaphospholane, 2-oxo-(2H)-4,6-disila-1,3,2-dioxaphosphorinane, 2-oxo-(2H)-4,6-disila-4,4,6,6-tetramethyl-1,3,2-dioxaphosphorinane, 2-oxo-(2H)-4,6-disila-4,4,6,6-tetraethyl-1,3,2-dioxaphosphorinane, 2-oxo-(2H)-4,6-disila-4,4,6,6-tetraphenyl-1,3,2-dioxaphosphorinane, 2-oxo-(2H)-4,6-disila-4,4,6,6-tetrabenzyl-1,3,2-dioxaphosphorinane, 2-oxo-(2H)-4,6-disila-4,6-dimethyl-1,3,2-dioxaphosphorinane, 2-oxo-(2H)-4,6-disila-4,6-diethyl-1,3,2-dioxaphosphorinane, 2-oxo-(2H)-4,6-disila-4,6-diphenyl-1,3,2-dioxaphosphorinane, 2-oxo-(2H)-4,6-disila-4,6-dibenzyl-1,3,2-dioxaphosphorinane, 2-oxo-(2H)-4,6-disila-5,5-dimethyl-1,3,2-dioxaphosphorinane, 2-oxo-(2H)-4,6-disila-5,5-diethyl-1,3,2-dioxaphosphorinane, 2-oxo-(2H)-4,6-disila-5,5-diphenyl-1,3,2-dioxaphosphorinane, 2-oxo-(2H)-4,6-disila-5,5-dibenzyl-1,3,2-dioxaphosphorinane, 2-oxo-(2H)-4,6-disila-5-ethyl-5-methyl-1,3,2-dioxaphosphorinane, 2-oxo-(2H)-4,6-disila-5-methyl-5-propyl-1,3,2-dioxaphosphorinane, 2-oxo-(2H)-4,6-disila-5-butyl-5-ethyl-1,3,2-dioxaphosphorinane, 2-oxo-(2H)-4,6-disila-4-isopropyl-5,5-dimethyl-1,3,2-dioxaphosphorinane, 2-oxo-(2H)-4,6-disila-4-propyl-5-ethyl-1,3,2-dioxaphosphorinane, 2-oxo-(2H)-4,6-disila-4-methyl-1,3,2-dioxaphosphorinane, or mixtures thereof.

Various organoaluminum compounds or mixtures thereof can be used in the catalyst composition. The term "organoaluminum compound" refers to any Al compound containing at least one covalent Al-C bond. Organoaluminum compounds that are soluble in a hydrocarbon solvent are preferred. Preferably, halogen-containing org-Al compounds containing Al-halogen bonds and those containing labile C-halogen bonds are avoided.

A preferred class of organoaluminum compounds is represented by the general formula AlRₙX₃₋ₙ where each R independently is a monovalent organic group attached to the Al atom via a C atom; each X independently is a H, a carboxylate group, an alkoxide group, or an aryloxide group; and n is an integer of from 1 to 3. Preferably, each R is a hydrocarbyl group such as, e.g., alkyl, cycloalkyl, substituted cycloalkyl, alkenyl, cycloalkenyl, substituted cycloalkenyl, aryl, substituted aryl, aralkyl, alkaryl, allyl, and alkynyl groups, with each group preferably containing from 1 C atom (or the appropriate minimum number of C atoms to form the group in question) up to about 20 C atoms. These hydrocarbyl groups may contain heteroatoms such as, but not limited to, N, O, Si, S, and P. Preferably, each X is a carboxylate group, an alkoxide group, or an aryloxide group, with each group preferably containing from 1 C atom (or the appropriate minimum number of C atoms to form the group in question) up to about 20 C atoms.

Suitable organoaluminum compounds include, but are not limited to, trihydrocarbylaluminum, dihydrocarbylaluminum hydride, hydrocarbylaluminum dihydride, dihydrocarbylaluminum carboxylate, hydrocarbylaluminum bis(carboxylate), dihydrocarbylaluminum alkoxide, hydrocarbylaluminum dialkoxide, dihydrocarbylaluminum aryloxide, hydrocarbylaluminum diaryloxide, and the like, and mixtures thereof. Trihydrocarbylaluminum compounds are generally preferred.

Specific organoaluminum compounds include trimethylaluminum, triethylaluminum, triisobutylaluminum, tri-n-propylaluminum, triisopropyl-aluminum, tri-n-butylaluminum, tri-t-butylaluminum, tri-n-pentylaluminum, trineopentylaluminum, tri-n-hexylaluminum, tri-n-octylaluminum, tris(2-ethylhexyl)aluminum, tricyclohexylaluminum, tris(1-methylcyclopentyl)aluminum, triphenylaluminum, tri-p-tolylaluminum, tris(2,6-dimethylphenyl)aluminum, tribenzylaluminum, diethylphenylaluminum, diethyl-p-tolylaluminum, diethyl-benzylaluminum, ethyldiphenylaluminum, ethyldi-p-tolylaluminum, ethyldi-benzylaluminum, diethylaluminum hydride, di-n-propylaluminum hydride, diisopropylaluminum hydride, di-n-butylaluminum hydride, diisobutylaluminum hydride, di-n-octylaluminum hydride, diphenylaluminum hydride, di-p-tolylaluminum hydride, dibenzylaluminum hydride, phenylethylaluminum hydride, phenyl-n-propylaluminum hydride, phenylisopropylaluminum hydride, phenyl-n-butylaluminum hydride, phenylisobutylaluminum hydride, phenyl-n-octylaluminum hydride, p-tolylethylaluminum hydride, p-tolyl-n-propylaluminum hydride, p-tolylisopropylaluminum hydride, p-tolyl-n-butylaluminum hydride, p-tolylisobutylaluminum hydride, p-tolyl-n-octylaluminum hydride, benzylethylaluminum hydride, benzyl-n-propylaluminum hydride, benzylisopropylaluminum hydride, benzyl-n-butylaluminum hydride, benzyl-isobutylaluminum hydride, and benzyl-n-octylaluminum hydride, ethylaluminum dihydride, n-propylaluminum dihydride, isopropylaluminum dihydride, n-butylaluminum dihydride, isobutylaluminum dihydride, n-octylaluminum dihydride, dimethylaluminum hexanoate, diethylaluminum octoate, diisobutylaluminum 2-ethylhexanoate, dimethylaluminum neodecanoate, diethylaluminum stearate, diisobutylaluminum oleate, methylaluminum bis(hexanoate), ethylaluminum bis(octoate), isobutylaluminum bis(2-ethylhexanoate), methylaluminum bis(neodecanoate), ethylaluminum bis(stearate), isobutylaluminum bis(oleate), dimethylaluminum methoxide, diethylaluminum methoxide, diisobutylaluminum methoxide, dimethylaluminum ethoxide, diethylaluminum ethoxide, diisobutylaluminum ethoxide, dimethylaluminum phenoxide, diethylaluminum phenoxide, diisobutylaluminum phenoxide, methylaluminum dimethoxide, ethylaluminum dimethoxide, isobutylaluminum dimethoxide, methylaluminum diethoxide, ethylaluminum diethoxide, isobutylaluminum diethoxide, methylaluminum diphenoxide, ethylaluminum diphenoxide, isobutylaluminum diphenoxide, etc., and mixtures thereof.

Another class of org-Al compounds is aluminoxanes which include oligomeric linear aluminoxanes represented by the formula: 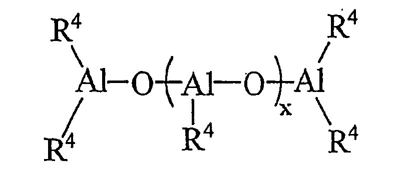 and oligomeric cyclic aluminoxanes that can be represented by the formula: 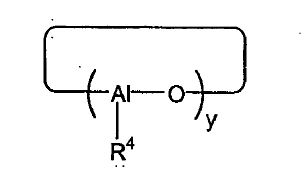 where x is an integer of from 1 to about 100, preferably from about 10 to about 50; y is an integer of from 2 to about 100, preferably from about 3 to about 20; each R⁴ independently is a monovalent organic group attached to the Al atom via a C atom. Preferably, each R⁴ is a hydrocarbyl group such as, e.g., alkyl, cycloalkyl, substituted cycloalkyl, alkenyl, cycloalkenyl, substituted cycloalkenyl, aryl, substituted aryl, aralkyl, alkaryl, allyl, and alkynyl groups, with each group preferably containing from 1 C atom (or the appropriate minimum number of C atoms to form the group in question) up to about 20 C atoms. These hydrocarbyl groups may contain heteroatoms such as, but not limited to, N, O, Si, S, and P. (The number of moles of the aluminoxane as used in this application refers to the number of moles of the Al atoms rather than the number of moles of the oligomeric aluminoxane molecules. This convention is commonly employed in the art of catalysis utilizing aluminoxanes.)

Aluminoxanes can be prepared by reacting trihydrocarbylaluminum compounds with water. This reaction can be performed according to known methods such as (1) a method in which the trihydrocarbylaluminum compound is dissolved in an organic solvent and then contacted with water, (2) a method in which the trihydrocarbylaluminum compound is reacted with water of crystallization contained in, for example, metal salts, or water adsorbed in inorganic or organic compounds, and (3) a method in which the trihydrocarbylaluminum compound is reacted with water in the presence of the monomer or monomer solution to be polymerized.

Suitable aluminoxane compounds include methylaluminoxane (MAO), modified methylaluminoxane (MMAO), ethylaluminoxane, n-propylalumin-oxane, isopropylaluminoxane, butylaluminoxane, isobutylaluminoxane, n-pentylaluminoxane, neopentylaluminoxane, n-hexylaluminoxane, n-octyl-aluminoxane, 2-ethylhexylaluminoxane, cylcohexylaluminoxane, 1-methyl-cyclopentylaluminoxane, phenylaluminoxane, 2,6-dimethylphenylalumin-oxane, and the like, and mixtures thereof. Isobutylaluminoxane is particularly useful on the grounds of its availability and its solubility in aliphatic and cycloaliphatic hydrocarbon solvents. MMAO can be formed by substituting about 20-80% of the methyl groups of MAO with C₂-C₁₂ hydrocarbyl groups, preferably with isobutyl groups, using techniques known in the art.

The present catalyst composition has very high catalytic activity for oligomerizing conjugated dienes over a wide range of total catalyst concentrations and catalyst ingredient ratios. The oligomerization products having the most desirable properties, however, are obtained within a narrower range of total catalyst concentrations and ingredient ratios. Further, the catalyst ingredients are believed to interact to form an active catalyst species. Accordingly, the optimum concentration for any one catalyst ingredient depends on the concentrations of the other catalyst ingredients. The molar ratio of the silyl phosphonate to the Fe-containing compound (P/Fe) can be varied from about 0.5:1 to about 50:1, more preferably from about 1:1 to about 25:1, and even more preferably from about 2:1 to about 10:1. The molar ratio of the org-Al compound to the Fe-containing compound (Al/Fe) can be varied from about 1:1 to about 200:1, more preferably from about 2:1 to about 100:1, and even more preferably from about 3:1 to about 50:1.

The catalyst composition is formed by combining or mixing the catalyst ingredients. Although an active catalyst species is believed to result from this combination, the degree of interaction or reaction between the various ingredients is not known with any certainty. Therefore, the term "catalyst composition" encompasses a simple mixture of the ingredients, a complex of the various ingredients caused by physical or chemical forces of attraction, a chemical reaction product of the ingredients, or a combination of the foregoing.

The catalyst composition may be formed *in situ* by adding the ingredients to a solution containing monomer and solvent, or simply bulk monomer, in either a stepwise or simultaneous manner. When adding the ingredients in a stepwise manner, the order in which they are added is not critical. Preferably, however, the Fe-containing compound is added first, followed by the silyl phosphonate and then the org-Al compound.

The catalyst ingredients may be pre-mixed outside the polymerization system at an appropriate temperature, generally from about -20° to about 80°C, with the resulting catalyst composition added to the monomer solution.

The catalyst composition may be pre-formed in the presence of monomer, i.e., the catalyst ingredients are pre-mixed in the presence of a small amount of the conjugated diene monomer at an appropriate temperature, generally from about -20° to about 80°C. The amount of conjugated diene monomer used for pre-forming the catalyst, per mole of the Fe-containing compound or halogen-containing Fe compound, can range from about 1 to about 500 moles, more preferably from about 5 to about 250 moles, and even more preferably from about 10 to about 100 moles. The resulting catalyst composition is added to the remainder of the monomer to be polymerized.

The catalyst composition may be formed by using a two-stage procedure. The first stage involves reacting the Fe-containing compound or halogen-containing Fe compound with the org-Al compound in the presence of a small amount of conjugated diene monomer at an appropriate temperature, generally from about -20° to about 80°C. In the second stage, the foregoing reaction mixture, the silyl phosphonate, and where appropriate the halogen-containing compound are charged in either a stepwise or simultaneous manner to the remainder of monomer to be polymerized.

An alternative two-stage procedure may also be employed. An Fe-ligand complex is first formed by pre-combining the Fe-containing compound or the halogen-containing Fe compound with the silyl phosphonate. Once formed, this Fe-ligand complex is combined with the org-Al compound, and where appropriate the halogen-containing compound, to form the active catalyst species. The Fe-ligand complex can be formed separately or in the presence of conjugated diene monomer to be polymerized. This complexation reaction can be conducted at any convenient temperature and normal pressure but, for an increased rate of reaction, this reaction preferably is performed at room temperature or above. The time required for the formation of the Fe-ligand complex is usually within the range of about 10 to about 120 minutes after mixing the Fe-containing or halogen-containing Fe compound with the silyl phosphonate. The temperature and time used for the formation of the Fe-ligand complex depends on several variables including the particular starting materials and solvent employed. Once formed, the Fe-ligand complex can be used without isolation from the complexation mixture. If desired, however, the Fe-ligand complex may be isolated from the complexation mixture before use.

When a solution of the catalyst composition or one or more of the catalyst ingredients is prepared outside the polymerization system as set forth in the foregoing methods, an organic solvent or carrier preferably is employed. The organic solvent may serve to dissolve the catalyst composition or ingredients, or the solvent may simply serve as a carrier in which the catalyst composition or ingredients may be suspended. Desirably, an organic solvent that is inert with respect to the catalyst composition is used. Useful solvents include hydrocarbon solvents such as aromatic hydrocarbons, aliphatic hydrocarbons, and cycloaliphatic hydrocarbons. Non-limiting examples of aromatic hydrocarbon solvents include benzene, toluene, xylenes, ethylbenzene, diethylbenzene, mesitylene, and the like. Non-limiting examples of aliphatic hydrocarbon solvents include n-pentane, n-hexane, n-heptane, n-octane, n-nonane, n-decane, isopentane, isohexanes, isopentanes, isooctanes, 2,2-dimethylbutane, petroleum ether, kerosene, petroleum spirits, and the like. Non-limiting examples of cycloaliphatic hydrocarbon solvents include cyclopentane, cyclohexane, methylcyclopentane, methylcyclohexane, and the like. Commercial mixtures of the above hydrocarbons may also be used. For environmental reasons, aliphatic and cycloaliphatic solvents are preferred.

The catalyst composition of this invention exhibits very high catalytic activity for the polymerization of 1,3-butadiene into s-PBD. Although one embodiment is directed toward the polymerization of 1,3-butadiene into s-PBD, other conjugated dienes can also be polymerized by means of the catalyst composition include 1,3-butadiene, isoprene, 1,3-pentadiene, 1,3-hexadiene, 2,3-dimethyl-1,3-butadiene, 2-ethyl-1,3-butadiene, 2-methyl-1,3-pentadiene, 3-methyl-1,3-pentadiene, 4-methyl-1,3-pentadiene, and 2,4-hexadiene. The preferred monomers are 1,3-butadiene, isoprene, 1,3-pentadiene, and 1,3-hexadiene. Mixtures of two or more conjugated dienes may also be utilized in co-polymerization.

Production of s-PBD is accomplished by polymerizing 1,3-butadiene in the presence of a catalytically effective amount of the catalyst composition. The total catalyst concentration to be employed in the polymerization mass depends on the interplay of various factors such as the purity of the ingredients, the polymerization temperature, the polymerization rate and conversion desired, and many other factors. Accordingly, a specific total catalyst concentration cannot be definitively set forth except to say that catalytically effective amounts of the respective catalyst ingredients should be used. Generally, the amount of the Fe-containing compound used, per 100 g of conjugated diene monomer, can be varied from about 0.01 to about 2 mmol, more preferably from about 0.02 to about 1.0 mmol, and even more preferably from about 0.05 to about 0.5 mmol.

Polymerization is preferably carried out in an organic solvent as the diluent. Accordingly, a solution polymerization system may be employed in which both the monomer to be polymerized and the polymer formed are soluble in the polymerization medium. Alternatively, a precipitation polymerization system may be employed by choosing a solvent in which the polymer formed is insoluble. In both cases, an amount of organic solvent in addition to the amount of organic solvent that may be used in preparing the catalyst composition is usually added to the polymerization system. The additional organic solvent may be the same as or different from the organic solvent used in preparing the catalyst composition. Desirably, an organic solvent that is inert with respect to the catalyst composition employed to catalyze the polymerization is selected. Exemplary hydrocarbon solvents have been set forth above. When a solvent is employed, the concentration of the monomer to be polymerized is not limited to a special range. Preferably, however, the concentration of monomer present in the polymerization medium at the beginning of the polymerization should be in a range of from about 3 to about 80% by weight, more preferably from about 5 to about 50% by weight, and even more preferably from about 10 to about 30% by weight.

The polymerization may also be carried out by means of bulk polymerization, which refers to a polymerization environment where no solvents are employed. The bulk polymerization can be conducted either in a condensed liquid phase or in a gas phase.

In performing the polymerization of, e.g., 1,3-butadiene, a molecular weight regulator may be employed to control the molecular weight of the s-PBD to be produced. As a result, the scope of the polymerization system can be expanded in such a manner that it can be used for the production of s-PBD having a wide range of molecular weights. Suitable types of molecular weight regulators include, but are not limited to, α-olefins such as ethylene, propylene, 1-butene, 1-pentene, 1-hexene, 1-heptene, and 1-octene; accumulated diolefins such as allene and 1,2-butadiene; nonconjugated diolefins such as 1,6-octadiene, 5-methyl-1,4-hexadiene, 1,5-cyclooctadiene, 3,7-dimethyl-1,6-octadiene, 1,4-cyclohexadiene, 4-vinylcyclohexene, 1,4-pentadiene, 1,4-hexadiene, 1,5-hexadiene, 1,6-heptadiene, 1,2-divinylcyclohexane, 5-ethylidene-2-norbomene, 5-methylene-2-norbornene, 5-vinyl-2-norbomene, dicyclopentadiene, and 1,2,4-trivinylcyclo-hexane; acetylenes such as acetylene, methylacetylene, and vinylacetylene; and mixtures thereof. The amount of the molecular weight regulator used, expressed in parts per hundred parts by weight of the 1,3-butadiene monomer (phm), is from about 0.01 to about 10 phm, preferably from about 0.02 to about 2 phm, and more preferably from about 0.05 to about 1 phm.

The molecular weight of the s-PBD to be produced can also be effectively controlled by conducting the polymerization of 1,3-butadiene monomer in the presence of H₂. In this case, the partial pressure of H₂ is preferably from about 1 to about 5000 kPa.

The polymerization of 1,3-butadiene may be carried out as a batch process, a continuous process, or a semi-continuous process. In the semi-continuous process, 1,3-butadiene monomer is intermittently charged as needed to replace that monomer already polymerized. In any case, the polymerization is preferably conducted under anaerobic conditions by using an inert protective gas such as N₂, Ar or He, with moderate to vigorous agitation. The polymerization temperature employed may vary widely from a low temperature such as -10°C or below to a high temperature such as 100°C or above, with a preferred temperature range being from about 20° to about 90°C. In general, elevated temperatures are undesirable due to thermal polymerization of the oligomers. The heat of polymerization may be removed by external cooling, cooling by evaporation of conjugated diene monomer or solvent, or a combination of the two methods. Although the pressure employed in the practice of this invention also may vary widely, a preferred pressure range is from about 100 to about 1000 kPa.

Once a desired conversion is achieved, the polymerization can be stopped by adding a terminator that inactivates the catalyst. Typically, the terminator employed is a protic compound such as, but not limited to, an alcohol, a carboxylic acid, an inorganic acid, water, or a mixture thereof. An antioxidant such as 2,6-di-*tert*-butyl-4-methylphenol may be added along with, before or after the addition of the terminator. The amount of the antioxidant employed is usually in the range of 0.2 to 1% by weight of the polymer product. When the polymerization has been stopped, the s-PBD product can be recovered from the polymerization mixture by utilizing conventional procedures of desolventization and drying. For instance, the s-PBD may be isolated from the polymerization mixture by coagulation of the polymerization mixture with an alcohol such as methanol, ethanol, or isopropanol, or by steam distillation of the solvent and the unreacted 1,3-butadiene monomer, followed by filtration. The polymer product is then dried to remove residual amounts of solvent and water.

Advantageously, the Fe-based catalyst composition can be manipulated to vary the characteristics of the resulting s-PBD. Namely, the s-PBD can have various melting temperatures, molecular weights, 1,2-linkage contents, and syndiotacticities, all of which are dependent upon the selection of the catalyst ingredients and the ingredient ratios. For example, it has been found that the melting temperature, molecular weight, 1,2-linkage content, and syndiotacticity of the s-PBD can be increased by synthesizing the polymer with a catalyst composition wherein the org-Al compound employed contains sterically bulky organic groups in lieu of sterically less bulky organic groups. Likewise, the melting temperature, 1,2-linkage content, and syndiotacticity of the s-PBD can also be increased by synthesizing the polymer with the catalyst composition of this invention wherein the two Si atoms of the silyl phosphonate employed are bonded to sterically bulky organic groups in lieu of sterically less bulky organic groups. Non-limiting examples of sterically bulky organic groups include isopropyl, isobutyl, t-butyl, neopentyl, 2-ethylhexyl, cyclohexyl, 1-methylcyclopentyl, and 2,6-dimethylphenyl groups. Non-limiting examples of sterically less bulky organic groups include methyl, fluoromethyl, ethyl, n-propyl, n-butyl, n-pentyl, n-hexyl, and n-octyl groups.

In one embodiment, s-PBD having a melting temperature from about 110° to about 210°C, more advantageously from about 120° to about 200°C, and even more advantageously from about 130° to about 190°C, can be prepared. The 1,2-linkage content of the s-PBD is preferably from about 60 to about 99%, and more preferably from about 70 to about 95%. The syndiotacticity of the s-PBD is preferably from about 60 to about 99%, more preferably from about 70 to about 95%, and even more preferably from about 75 to 90%.

The s-PBD has many uses. It can be blended into and cocured with various natural or synthetic rubbers to improve the properties thereof. For example, it can be incorporated into elastomers to improve the green strength of those elastomers, particularly in tires. The supporting or reinforcing carcass of tires is particularly prone to distortion during tire building and curing procedures. For this reason, incorporation of s-PBD into rubber compositions that are utilized in the supporting carcass of tires has particular utility in preventing or minimizing this distortion. In addition, incorporation of s-PBD into tire tread compositions can reduce the heat build-up and improve the tear and wear resistance of tire treads. It is also useful in the manufacture of films and packaging materials and in many molding applications.

To demonstrate the practice of the present invention, the following examples have been prepared and tested.

### EXAMPLES

### Example 1

Bis(trimethylsilyl) phosphonate was synthesized by reacting anhydrous H₃PO₃ with hexamethyldisiloxane in the presence of anhydrous ZnCl₂ as the catalyst. Anhydrous H₃PO₃ (33.1 g, 0.404 mol), hexamethyldisiloxane (98.4 g, 0.606 mol), anhydrous ZnCl₂ (2.0 g, 0.015 mol), and benzene (240 mL) were mixed in a round-bottom reaction flask connected to a Dean-Stark trap and reflux condenser. The mixture was heated to reflux for 24 hours, with continuous removal of water via the trap.

The reaction flask was then connected to a distillation head and a receiving flask. The benzene and unreacted hexamethyldisiloxane were removed by distillation at atmospheric pressure. The remaining crude product was distilled under vacuum, yielding bis(trimethylsilyl) phosphonate as a colorless liquid (51.7 g, 0.228 mol, 57% yield).

The identity of the product was established by NMR spectroscopy. ¹H NMR data (CDCl₃, 25°C, referenced to TMS); 6.85 (doublet ¹J_{HP} = 699 Hz, 1 H, H-P), 0.31 (singlet, 18 H, C*H*₃). ¹³P NMR data (CDCl₃, 25°C, referenced to external 85% H₃PO₄):. -14.2 (doublet, ¹J_{HP} = 698 Hz).

### Example 2

Bis(triethylsilyl) phosphonate was synthesized by reacting anhydrous H₃PO₃ with hexaethyldisiloxane in the presence of anhydrous ZnCl₂ as the catalyst. Anhydrous H₃PO₃ (22.1 g, 0.269 mol), hexaethyldisiloxane (99.5 g, 0.404 mol), anhydrous ZnCl₂ (1.33 g, 0.010 mol), and toluene (230 mL) were mixed in a round-bottom reaction flask connected to a Dean-Stark trap and a reflux condenser. The mixture was heated to reflux for 29 hours, with continuous removal of water via the trap.

The reaction flask was then connected to a distillation head and a receiving flask. The toluene and unreacted hexaethyldisiloxane were removed by distillation at atmospheric pressure. The remaining crude product was distilled under vacuum, yielding bis(triethylsilyl) phosphonate as a colorless liquid (67.9 g, 0.219 mol, 81% yield).

The identity of the product was established by NMR spectroscopy. H NMR data (CDCl₃, 25°C, referenced to TMS); 6.85 (doublet, ¹J_{HP} = 695 Hz, 1 H, *H*-P), 1.01 (triplet, ³J_{HH} = 7.4, 18 H, C*H*₃), 0.76 (quartet, ³J_{HH} = 7.4, 12 H, C*H*₂). ¹³P NMR data (CDCl₃, 25°C, referenced to external 85% H₃PO₄:. -14.5 (doublet, ¹J_{HP} = 695 Hz).

### Examples 3-5

An oven-dried 1 L glass bottle was capped with a self-sealing rubber liner and a perforated metal cap. After the bottle was thoroughly purged with a stream of dry N₂, the bottle was charged with 236 g of a 1,3-butadiene/hexanes blend containing 21.2% by weight of 1,3-butadiene. Catalyst ingredients were then added to the bottle in the following order:
0.050 mmol iron(II) 2-ethylhexanoate,
0.20 mmol bis(trimethylsilyl) phosphonate, and
t mmol triethylaluminum.
The bottle was tumbled for 6 hours in a water bath maintained at 65°C. The polymerization was terminated by addition of 10 mL isopropanol containing 1.0 g 2,6-di-*tert*-butyl-4-methylphenol. The polymerization mixture was coagulated with 3 L isopropanol.

The resulting s-PBD was isolated by filtration and dried to a constant weight under vacuum at 60°C. The yield of the polymer was *u*%.

As measured by DSC, the polymer had a melting temperature of v. The ¹H and ¹³C NMR analysis of the polymer indicated a 1,2-linkage content of 88.5% and a syndiotacticity of 81.0%. As determined by GPC, the polymer had a weight average molecular weight (M_{w}) of *w*, a number average molecular weight (Mₙ) of *x* and a polydispersity index (M_{w}/Mₙ) of *y*.

The monomer charge, the amounts of the catalyst ingredients, and the properties of the resulting s-PBD are summarized in Table I.

**Table I**

| | **3** | **4** | **5** |
|---|---|---|---|
| *t* (mmol) | 0.25 | 0.20 | 0.30 |
| Fe/P/Al molar ratio | 1:4:5 | 1:4:4 | 1:4:6 |
| *u* (%) after 6 hours | 95 | 94 | 92 |
| *v* (°C) | 160 | 159 | 160 |
| *w* | 601,000 | 594,000 | 618,000 |
| *x* | 286,000 | 258,000 | 281,000 |
| *y* | 2.1 | 2.3 | 2.2 |

### Examples 6-8

The procedure of Examples 3-5 was repeated except that tri-n-butylaluminum was substituted for triethylaluminum, and the catalyst ingredient ratio was varied as shown in Table II. The monomer charge, the amounts of the catalyst ingredients, and the properties of the resulting s-PBD are summarized in Table II.

**Table II**

| | **6** | **7** | **8** |
|---|---|---|---|
| *t* (mmol) | 0.20 | 0.25 | 0.30 |
| Fe/P/Al molar ratio | 1:4:4 | 1:4:5 | 1:4:6 |
| *u* (%) after 6 hours | 94 | 93 | 92 |
| *v* (°C) | 160 | 161 | 160 |
| *w* | 575,000 | 593,000 | 585,000 |
| *x* | 261,000 | 296,000 | 279,000 |
| *y* | 2.2 | 2.0 | 2.1 |

### Examples 9-11

The procedure of Examples 3-5 was repeated except that triisobutylaluminum was substituted for triethylaluminum, and the catalyst ingredient ratio was varied as shown in Table III. The monomer charge, the amounts of the catalyst ingredients, and the properties of the resulting s-PBD are summarized in Table III.

**Table III**

| | **9** | **10** | **11** |
|---|---|---|---|
| *t* (mmol) | 0.25 | 0.30 | 0.35 |
| Fe/P/Al molar ratio | 1:4:5 | 1:4:6 | 1:4:7 |
| *u* (%) after 6 hours | 93 | 92 | 92 |
| *v* (°C) | 176 | 176 | 176 |
| *w* | 825,000 | 857,000 | 875,000 |
| *x* | 409,000 | 444,000 | 460,000 |
| *y* | 2.0 | 1.9 | 1.9 |

### Examples 12-14

The procedure of Examples 3-5 was repeated except that bis(triethylsilyl) phosphonate was substituted for bis(trimethylsilyl) phosphonate, triisobutylaluminum was substituted for triethylaluminum, the catalyst ingredient ratio was varied as shown below, and the polymerization time was extended to 8 hours. The monomer charge, the amounts of the catalyst ingredients, and the properties of the resulting s-PBD are summarized in Table IV.

The ¹H and ¹³C NMR analysis of the polymer produced in Example 13 indicated a 1,2-linkage content of 96.4% and a syndiotacticity of 90.5%.

**Table IV**

| | **12** | **13** | **14** |
|---|---|---|---|
| *t* (mmol) | 0.35 | 0.40 | 0.45 |
| Fe/P/Al molar ratio | 1:4:7 | 1:4:8 | 1:4:9 |
| *u* (%) after 8 hours | 81 | 89 | 86 |
| *v* (°C) | 187 | 186 | 186 |
| *w* | 829,000 | 835,000 | 862,000 |
| *x* | 432,000 | 409,000 | 445,000 |
| *y* | 1.9 | 2.0 | 1.9 |

### Example 15-17

The procedure of Examples 3-5 was repeated except that iron(III) 2-ethylhexanoate was substituted for iron(II) 2-ethylhexanoate, and the catalyst ingredient ratio was varied as shown in Table V. The monomer charge, the amounts of the catalyst ingredients, and the properties of the resulting s-PBD are summarized in Table V.

The ¹H and ¹³C NMR analysis of the polymer produced in Example 16 indicated a 1,2-linkage content of 88.8% and a syndiotacticity of 81.2%.

**Table V**

| | **15** | **16** | **17** |
|---|---|---|---|
| *t* (mmol) | 0.20 | 0.25 | 0.30 |
| Fe/P/Al molar ratio | 1:4:4 | 1:4:5 | 1:4:6 |
| *u* (%) after 6 hours | 93 | 94 | 91 |
| *v* (°C) | 160 | 160 | 160 |
| *w* | 578,000 | 604,000 | 650,000 |
| *x* | 237,000 | 273,000 | 311,000 |
| *y* | 2.4 | 2.2 | 2.1 |

### Examples 18-20

The procedure of Examples 3-5 was repeated except that iron(III) 2-ethylhexanoate was substituted for iron(II) 2-ethylhexanoate, tri-n-butylaluminum was substituted for triethylaluminum, and the catalyst ingredient ratio was varied as shown in Table VI. The monomer charge, the amounts of the catalyst ingredients, and the properties of the resulting s-PBD are summarized in Table VI.

**Table VI**

| | **18** | **19** | **20** |
|---|---|---|---|
| *t* (mmol) | 0.20 | 0.25 | 0.30 |
| Fe/P/Al molar ratio | 1:4:4 | 1:4:5 | 1:4:6 |
| *u* (%) after 6 hours | 93 | 92 | 90 |
| *v* (°C) | 160 | 162 | 159 |
| *w* | 585,000 | 587,000 | 595,000 |
| *x* | 261,000 | 292,000 | 296,000 |
| *y* | 2.2 | 2.0 | 2.0 |

### Examples 21-23

The procedure described in Examples 3-5 was repeated except that iron(III) 2-ethylhexanoate was substituted for iron(II) 2-ethylhexanoate, triisobutylaluminum was substituted for triethylaluminum, and the catalyst ingredient ratio was varied as shown in Table VII. The monomer charge, the amounts of the catalyst ingredients, and the properties of the resulting s-PBD are summarized in Table VII.

**Table VII**

| | **21** | **22** | **23** |
|---|---|---|---|
| *t* (mmol) | 0.25 | 0.30 | 0.35 |
| Fe/P/Al molar ratio | 1:4:5 | 1:4:6 | 1:4:7 |
| *u* (%) after 6 hours | 94 | 92 | 91 |
| *v* (°C) | 176 | 176 | 176 |
| *w* | 807,000 | 894,000 | 835,000 |
| *x* | 403,000 | 491,000 | 461,000 |
| *y* | 2.0 | 1.8 | 1.8 |

### Examples 24-26

The procedure of Examples 3-5 was repeated except that bis(triethylsilyl) phosphonate was substituted for bis(trimethylsilyl) phosphonate, triisobutylaluminum was substituted for triethylaluminum, the catalyst ingredient ratio was varied as shown in Table VIII, and the polymerization time was extended to 8 hours. The monomer charge, the amounts of the catalyst ingredients, and the properties of the resulting s-PBD are summarized in Table VIII.

The ¹H and ¹³C NMR analysis of the polymer produced in Example 25 indicated a 1,2-linkage content of 96.1 % and a syndiotacticity of 90.6%.

**Table VIII**

| | **24** | **25** | **26** |
|---|---|---|---|
| *t* (mmol) | 0.35 | 0.40 | 0.45 |
| Fe/P/Al molar ratio | 1:4:7 | 1:4:8 | 1:4:9 |
| *u* (%) after 8 hours | 83 | 90 | 87 |
| *v* (°C) | 187 | 186 | 186 |
| *w* | 836,000 | 832,000 | 883,000 |
| *x* | 467,000 | 453,000 | 471,000 |
| *y* | 1.8 | 1.8 | 1.9 |

## Claims

1. A catalyst composition that is the combination of ingredients comprising an iron-containing compound; a silyl phosphonate; and an organoaluminum compound, wherein said silyl phosphonate is an acyclic silyl phosphonate defined by the structure: 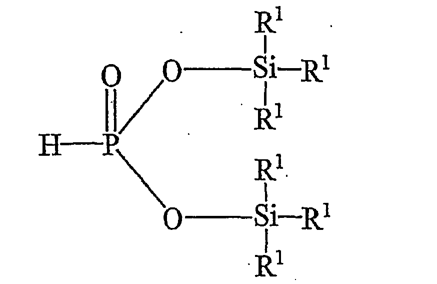 where each R¹ independently is a hydrogen atom or monovalent organic group or wherein said silyl phophonate is a cyclic silyl phosphonate defined by the structure: 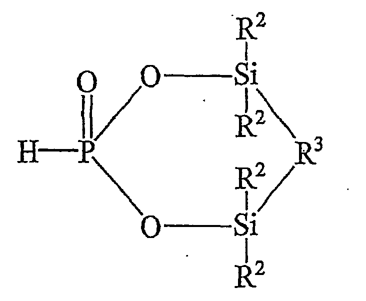 where each R² independently is a hydrogen atom or a monovalent organic group and R³ is a bond between silicon atoms or a divalent organic group.

2. The catalyst composition of claim 1 wherein said iron-containing compound is an iron carboxylate, iron organophosphate, iron organophosphonate, iron organophosphinate, iron carbamate, iron dithiocarbamate, iron xanthate, iron β-diketonate, iron alkoxide, iron aryloxide, organoiron compound or mixture thereof.

3. The catalyst composition of claim 1 where said acyclic silyl phosphonate is bis(trimethylsilyl) phosphonate, bis(triethylsilyl) phosphonate, bis(tri-n-propylsilyl) phosphonate, bis(triisopropylsilyl) phosphonate, bis(tri-n-butylsilyl) phosphonate, bis(tricyclohexylsilyl) phosphonate, bis(triphenylsilyl) phosphonate, bis[tris(2-ethylhexyl)silyl] phosphonate, or bis[tris-(2,4,6-trimethylphenyl)silyl] phosphonate.

4. The catalyst composition of claim 1 where said cyclic silyl phosphonate is 2-oxo-(2H)-4,5-disila-1,3,2-dioxaphospholane, 2-oxo-(2H)-4,5-disila-4,4,5,5-tetramethyl-1,3,2-dioxaphospholane, 2-oxo-(2H)-4,5-disila-4,4,5,5-tetraphenyl-1,3,2-dioxaphospholane, 2-oxo-(2H)-4,6-disila-1,3,2-dioxaphosphorinane, 2-oxo-(2H)-4,6-disila-4,4,6,6-tetramethyl-1,3,2-dioxaphosphorinane, 2-oxo-(2H)-4,6-disila-4,4,6,6-tetraethyl-1,3,2-dioxaphosphorinane, 2-oxo-(2H)-4,6-disila-4,4,6,6-tetraphenyl-1,3,2-dioxaphosphorinane, 2-oxo-(2H)-4,6-disila-4,4,6,6-tetrabenzyl-1,3,2-dioxaphosphorinane, 2-oxo-(2H)-4,6-disila-4,6-dimethyl-1,3,2-dioxaphosphorinane, or 2-oxo-(2H)-4,6-disila-4,6-diethyl-1,3,2-dioxaphosphorinane.

5. The catalyst composition of any of claims 1 to 4 where the organoaluminum compound is of the formula AlRₙX₃₋ₙ where each R independently is a monovalent organic group attached to the aluminum atom via a carbon atom; each X independently is a hydrogen atom, a carboxylate group, an alkoxide group, or an aryloxide group, and n is an integer of from 1 to 3.

6. The catalyst composition of claim 5 where said organoaluminum compound is trihydrocarbylaluminum, dihydrocarbylaluminum hydride, hydrocarbylaluminum dihydride, dihydrocarbylaluminum carboxylate, hydrocarbylaluminum bis(carboxylate), dihydrocarbylaluminum alkoxide, hydrocarbylaluminum dialkoxide, dihydrocarbylaluminum aryloxide, hydrocarbylaluminum diaryloxide or mixtures thereof.

7. The catalyst composition of any of claims 1 to 4 where said organoaluminum compound is at least one of an oligomeric linear aluminoxane defined by the formula: 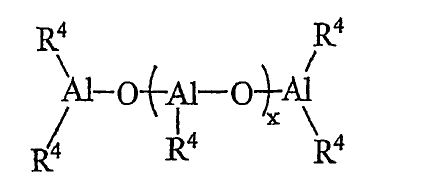 and an oligomeric cyclic aluminoxane defined by the formula: 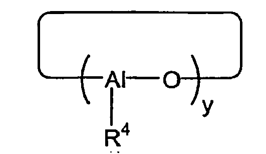 where x is an integer of from 1 to 100; y is an integer of 2 to 100; and each R⁴ independently is a monovalent organic group attached to the aluminum atom via a carbon atom.

8. The catalyst composition of claim 1, where the molar ratio of said organoaluminum compound to said iron-containing compound is from 1:1 to 200:1, and the molar ratio of said silyl phosphonate to said iron-containing compound is from 0.5:1 to 50:1.

9. A process for forming conjugated diene polymers comprising the step of polymerizing conjugated diene monomers in the presence of a catalytically effective amount of a catalyst composition formed by combining (a) an iron-containing compound, (b) a silyl phosphonate, and an organoaluminum compound, wherein said silyl phosphonate is an acyclic silyl phosphonate defined by the structure: 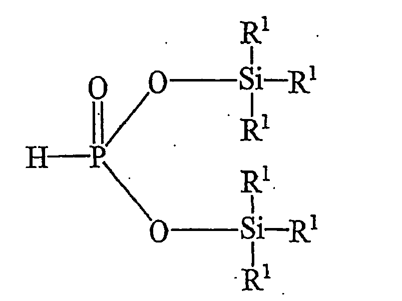 where each R¹ independently is a hydrogen atom or monovalent organic group or wherein said silyl phophonate is a cyclic silyl phosphonate defined by the structure: 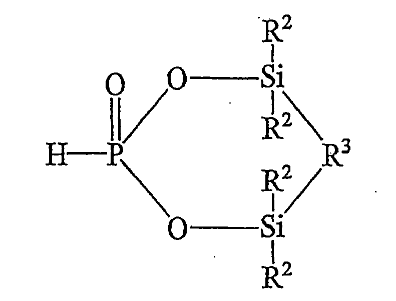 where each R² independently is a hydrogen atom or a monovalent organic group and R³ is a bond between silicon atoms or a divalent organic group.

## Patentansprüche

1. Katalysatorzusammensetzung aus einer Kombination von Inhaltsstoffen, umfassend eine Eisen-enthaltende Verbindung; ein Silylphosphonat; und eine Organoaluminiumverbindung, wobei das Silylphosphonat ein acyclisches Silylphosphonat mit der Formel 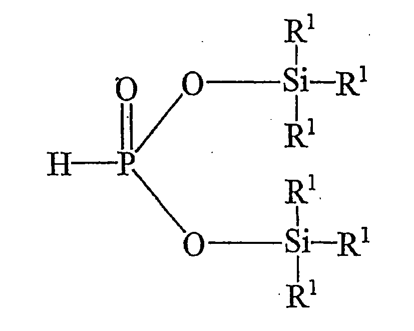 ist, worin jedes R¹ unabhängig ein Wasserstoffatom oder eine monovalente organische Gruppe ist, oder
wobei das Silylphosphonat ein cyclisches Silylphosphonat mit der Formel 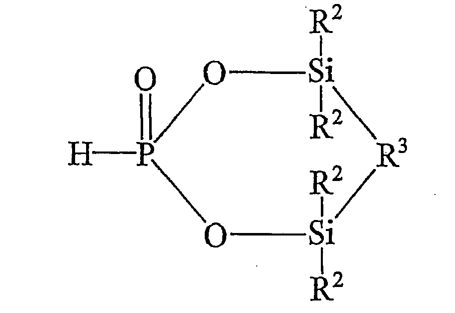 ist, worin jedes R² unabhängig ein Wasserstoffatom oder eine monovalente organische Gruppe ist und R³ eine Bindung zwischen Siliciumatomen oder einer zweiwertigen organischen Gruppe ist.

2. Katalysatorzusammensetzung nach Anspruch 1, wobei die Eisen-enthaltende Verbindung eine Eisencarboxylat-, Eisenorganophosphat-, Eisenorganophosphonat-, Eisenorganophosphinat-, Eisencarbamat-, Eisendithiocarbamat-, Eisenxanthat-, Eisen-βdiketonat-, Eisenalkoxid-, Eisenaryloxid-, Organoeisenverbindung oder ein Gemisch davon ist.

3. Katalysatorzusammensetzung nach Anspruch 1, wobei das acyclische Silylphosphonat Bis(trimethylsilyl)phosphonat, Bis(triethylsilyl)phosphonat, Bis(tri-n-propylsilyl)phosphonat, Bis(triisopropylsilyl)phosphonat, Bis(tri-n-butylsilyl)phosphonat, Bis(tricyclohexylsilyl)phosphonat, Bis(triphenylsilyl)phosphonat, Bis[tris(2-ethylhexyl)silyl]phosphonat oder Bis[tris(2,4,6-trimethylphenyl)silyl]phosphonat ist.

4. Katalysatorzusammensetzung nach Anspruch 1, wobei das cyclische Silylphosphonat 2-Oxo-(2H)-4,5-disila-1,3,2-dioxaphospholan, 2-Oxo-(2H)-4,5-disila-4,4,5,5-tetramethyl-1,3,2-dioxaphospholan, 2-Oxo-(2H)-4,5-disila-4,4,5,5-tetraphenyl-1,3,2-dioxaphospholan, 2-Oxo-(2H)-4,6-disila-1,3,2-dioxaphosphorinan, 2-Oxo-(2H)-4,6-disila-4,4,6,6-tetramethyl-1,3,2-dioxaphosphorinan, 2-Oxo-(2H)-4,6-disila-4,4,6,6-tetraethyl-1,3,2-dioxaphosphorinan, 2-Oxo-(2H)-4,6-disila-4,4,6,6-tetraphenyl-1,3,2-dioxaphosphorinan, 2-Oxo-(2H)-4,6-disila-4,4,6,6-tetrabenzyl-1,3,2-dioxaphosphorinan, 2-Oxo-(2H)-4,6-disila-4,6-dimethyl-1,3,2-dioxaphosphorinan oder 2-Oxo-(2H)-4,6-disila-4,6-diethyl-1,3,2-dioxaphosphorinan ist.

5. Katalysatorzusammensetzung nach einem der Ansprüche 1 bis 4, wobei die Organoaluminiumverbindung die Formel AlRₙX₃₋ₙ aufweist, worin jedes R unabhängig eine über ein Kohlenstoffatom an das Aluminiumatom gebundene monovalente organische Gruppe ist; jedes X unabhängig ein Wasserstoffatom, eine Carboxylatgruppe, eine Alkoxidgruppe oder eine Aryloxidgruppe ist, und n eine ganze Zahl von 1 bis 3 ist.

6. Katalysatorzusammensetzung nach Anspruch 5, wobei die Organoaluminiumverbindung Trihydrocarbylaluminium, Dihydrocarbylaluminiumhydrid, Hydrocarbylaluminiumdihydrid, Dihydrocarbylaluminiumcarboxylat, Hydrocarbylaluminiumbis(carboxylat), Dihydrocarbylaluminiumalkoxid, Hydrocarbylaluminiumdialkoxid, Dihydrocarbylaluminiumaryloxid, Hydrocarbylaluminiumdiaryloxid oder ein Gemisch davon ist.

7. Katalysatorzusammensetzung nach einem der Ansprüche 1 bis 4, wobei die Organoaluminiumverbindung mindestens eine ausgewählt aus einem oligomeren linearen Aluminoxan der Formel 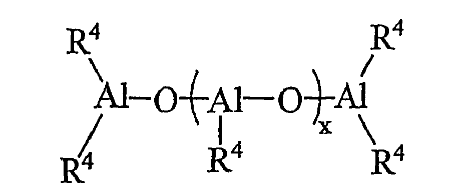 und einem oligomeren cyclischen Aluminoxan der Formel 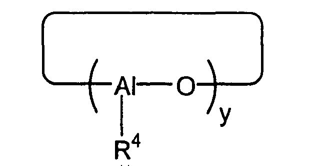 ist, worin x eine ganze Zahl von 1 bis 100 ist; y eine ganze Zahl von 2 bis 100 ist; und jedes R⁴ unabhängig eine über ein Kohlenstoffatom an ein Aluminiumatom gebundene monovalente organische Gruppe ist.

8. Katalysatorzusammensetzung nach Anspruch 1, wobei das Molverhältnis der Organoaluminiumverbindung zu der Eisen-enthaltenden Verbindung im Bereich von 1:1 bis 200:1 liegt, und das Molverhältnis des Silylphosphonats zu der Eisen-enthaltenden Verbindung im Bereich von 0,5:1 bis 50:1 liegt.

9. Verfahren zur Bildung von konjugierten Dienpolymeren, umfassend den Schritt der Polymerisation von konjugierten Dienmonomeren in Gegenwart einer katalytisch wirksamen Menge einer Katalysatorzusammensetzung, gebildet durch Kombination (a) einer Eisen-enthaltenden Verbindung, (b) eines Silylphosphonats und einer Organoaluminiumverbindung, wobei das Silylphosphonat ein acyclisches Silylphosphonat der Formel 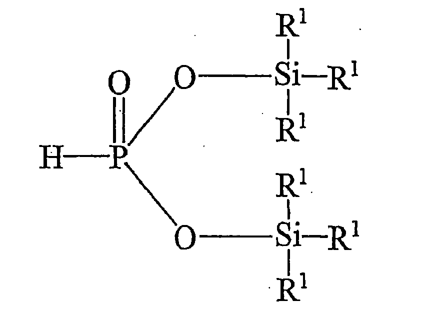 ist, worin jedes R¹ unabhängig ein Wasserstoffatom oder eine monovalente organische Gruppe ist, oder
wobei das Silylphosphonat ein cyclisches Silylphosphonat der Formel 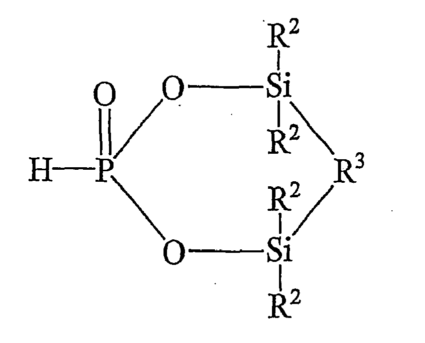 ist, worin jedes R² unabhängig ein Wasserstoffatom oder eine monovalente organische Gruppe ist und R³ eine Bindung zwischen Siliciumatomen oder einer divalenten organischen Gruppe ist.

## Revendications

1. Composition de catalyseur qui est la combinaison d'ingrédients comprenant un composé contenant du fer ; un silylphosphonate ; et un composé organique d'aluminium, dans laquelle ledit silylphosphonate est un silylphosphonate acyclique défini par la structure : 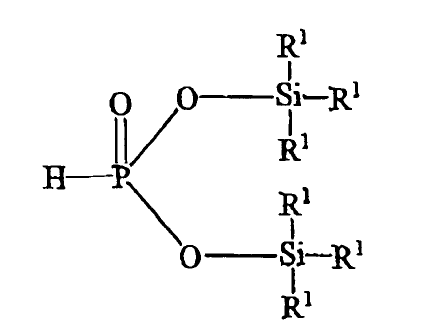 dans laquelle chaque R¹ représente indépendamment un atome d'hydrogène ou un groupe organique monovalent, ou dans laquelle ledit silylphosphonate est un silylphosphonate cyclique défini par la structure : 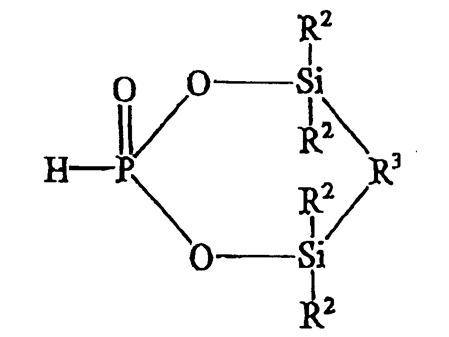 dans laquelle chaque groupe R² représente indépendamment un atome d'hydrogène ou un groupe organique monovalent et R³ représente une liaison entre les atomes de silicium ou un groupe organique divalent.

2. Composition de catalyseur suivant la revendication 1, dans laquelle ledit composé contenant du fer est un carboxylate de fer, un organophosphate de fer, un organophosphonate de fer, un organophosphinate de fer, un carbonate de fer, un dithiocarbonate de fer, un xanthate de fer, un β-dicétonate de fer, un alcoolate de fer, un aryloxyde de fer, un composé organique de fer ou un de leurs mélanges.

3. Composition de catalyseur suivant la revendication 1, dans laquelle ledit silylphosphonate acyclique est le bis(triméthylsilyl)phosphonate, le bis(triéthylsilyl)phosphonate, le bis(tri-n-propylsilyl)phosphonate, le bis(triisopropylsilyl)-phosphonate, le bis(tri-n-butylsilyl)phosphonate, le bis-(tricyclohexylsilyl)phosphonate, le bis(triphénylsilyl)-phosphonate, le bis[tris(2-éthylhexyl)silyl]phosphonate ou le bis[tris(2,4,6-triméthylphényl)silyl]phosphonate.

4. Composition de catalyseur suivant la revendication 1, dans laquelle ledit silylphosphonate cyclique est le 2-oxo((2H)-4,5-disila-1,3,2-dioxaphospholane, le 2-oxo-(2H)-4,5-disila-4,4,5,5-tétraméthyl-1,3,2-dioxaphospholane, 2-oxo-(2H)-4,5-disila-4,4,5,5-tétraphényl-1,3,2-dioxaphospholane, le 2-oxo-(2H)-4,6-disila-1,3,2-dioxaphosphorinane, le 2-oxo-(2H)-4,6-disila-4,4,6,6-tétraméthyl-1,3,2-dioxaphosphorinane, le 2-oxo-(2H)-4,6-disila-4,4,6,6-tétraéthyl-1,3,2-dioxaphosphorinane, le 2-oxo-(2H)-4,6-disila-4,4,6,6-tétrabenzyl-1,3, 2-dioxaphosphorinane, le 2-oxo-(2H)-4,6-disila-4,4,6,6-tétrabenzyl-1,3,2-dioxaphosphorinane, le 2-oxo-(2H)-4,6-disila-4,6-diméthyl-1,3,2-dioxaphosphorinane ou le 2-oxo-(2H)-4,6-disila-4,6-diéthyl-1,3,2-dioxaphosphorinane.

5. Composition de catalyseur suivant l'une quelconque des revendications 1 à 4, dans laquelle le composé organique d'aluminium répond à la formule AlRₙX₃₋ₙ dans laquelle chaque R représente indépendamment un groupe organique monovalent fixé à l'atome d'aluminium par un atome de carbone ; chaque X représente indépendamment un atome d'hydrogène, un groupe carboxylate, un groupe alcoolate ou un groupe aryloxyde, et n représente un nombre entier de 1 à 3.

6. Composition de catalyseur suivant la revendication 5, dans laquelle ledit composé organique d'aluminium est le trihydrocarbylaluminium, l'hydrure de dihydrocarbylaluminium, le dihydrure d'hydrocarbyl-aluminium, le carboxylate de dihydrocarbylaluminium, le bis(carboxylate) d'hydrocarbylaluminium, l'alcoolate de dihydrocarbylaluminium, le dialcoolate d'hydrocarbyl-aluminium, l'aryloxyde de dihydrocarbylaluminium, le diaryloxyde d'hydrocarbylaluminium ou un leurs mélanges.

7. Composition de catalyseur suivant l'une quelconque des revendications 1 à 4, dans laquelle ledit composé organique d'aluminium est constitué d'au moins un aluminoxanne linéaire oligomère défini par la formule : 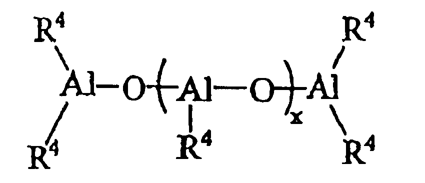 et d'un aluminoxanne cyclique oligomère défini par la formule : 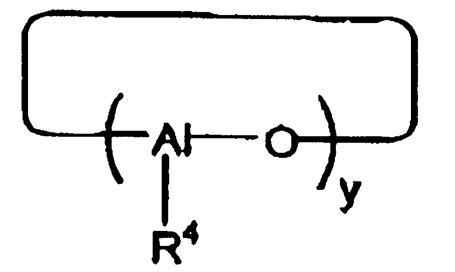 formules dans lesquelles x représente un nombre entier de 1 à 100 ; y représente un nombre entier de 2 à 100 ; et chaque groupe R⁴ représente indépendamment un groupe organique monovalent fixé à l'atome d'aluminium par un atome de carbone.

8. Composition de catalyseur suivant la revendication 1, dans laquelle le rapport molaire dudit composé organique d'aluminium audit composé contenant du fer est de 1:1 à 200:1, et le rapport molaire dudit silylphosphonate audit composé contenant du fer est de 0,5:1 à 50:1.

9. Procédé pour former des polymères de diènes conjugués, comprenant l'étape de polymérisation de monomères diéniques conjugués en présence d'une quantité catalytiquement efficace d'une composition de catalyseur formée en combinant (a) un composé contenant du fer, (b) un silylphosphonate, et un composé organique d'aluminium, dans lequel ledit silylphosphonate est un silylphosphonate acyclique défini par la structure : 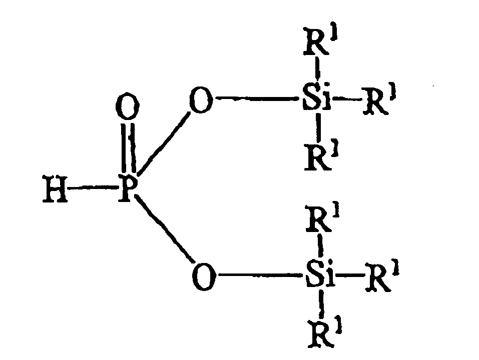 dans laquelle chaque groupe R¹ représente indépendamment un atome d'hydrogène ou un groupe organique monovalent, ou dans lequel ledit silylphosphonate est un silylphosphonate cyclique défini par la structure : 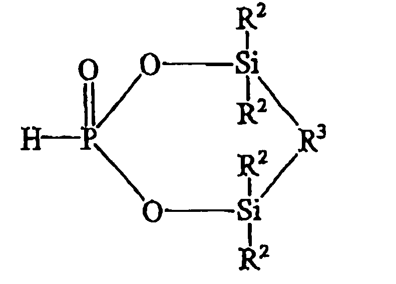 dans laquelle chaque groupe R² représente indépendamment un atome d'hydrogène ou un groupe organique monovalent et R³ représente une liaison entre les atomes de silicium ou un groupe organique divalent.
